# EUROPÄISCHE PATENTSCHRIFT

(11) **EP 3 323 276 B1**
(45) Veröffentlichungstag und Bekanntmachung des Hinweises auf die Patenterteilung: **21.08.2024**
(21) Anmeldenummer: 16731919.3
(22) Anmeldetag: 24.06.2016
(51) Int. Cl.: H05B 47/20

(54) **SCHALTUNGSANORDNUNG ZUM BETREIBEN EINER ERSTEN UND EINER ZWEITEN LEUCHTEINHEIT EINES KRAFTFAHRZEUGS**
CIRCUIT ARRANGEMENT FOR OPERATING A FIRST AND A SECOND LIGHT-EMITTING UNIT OF A MOTOR VEHICLE
DISPOSITION DES CIRCUITS POUR UNE PREMIÈRE ET UNE DEUXIÈME UNITÉ D'ÉCLAIRAGE D'UN VÉHICULE

(30) Priorität: 15.07.2015 DE 102015213291
(43) Veröffentlichungstag der Anmeldung: 23.05.2018
(73) Patentinhaber: Marelli Automotive Lighting Reutlingen (Germany) GmbH, 72762 Reutlingen (DE)
(72) Erfinder: HIEGLER, Michael, 72760 Reutlingen (DE); BORMANN, Uwe, 89520 Heidenheim (DE)
(74) Vertreter: DREISS Patentanwälte PartG mbB
(86) Internationale Anmeldenummer: PCT/EP2016/064716
(87) Internationale Veröffentlichungsnummer: WO 2017/009023

(56) Entgegenhaltungen:
- EP-A1- 1 379 108
- DE-A1- 10 041 888
- DE-A1- 10 044 194
- DE-A1- 102005 055 009
- DE-A1- 102011 005 582
- DE-A1- 102013 113 007
- DE-A1- 4 041 459
- US-A- 5 680 098
- US-A1- 2011 025 215
- US-A1- 2014 218 953

## Beschreibung

Die Erfindung betrifft eine Beleuchtungsanordnung umfassend Lichtmodul eines Kraftfahrzeugs und eine Schaltungsanordnung.

DE 10 2011 005 582 A1 offenbart eine Beleuchtungsanordnung gemäß dem Oberbegriff von Anspruch 1. Die Beleuchtungseinrichtung ist für ein Kraftfahrzeug mit einer Lichtquelle vorgesehen, die dazu eingerichtet ist, aus zugeführter elektrischer Energie Licht zu erzeugen. Eine Ansteuerschaltung ist dazu eingerichtet, einen elektrischen Stromfluss durch die Lichtquelle durch eine Betätigung eines mit der Lichtquelle gekoppelten Schaltelements zu steuern.

DE 10 2013 113 007 A1 offenbart eine Steuereinrichtung für Außenlichteinheiten von Fahrzeugen. Bei dieser Steuereinrichtung erfolgt die Ansteuerung einer benachbarten Steuereinheit, falls diese nicht ordnungsgemäß betrieben werden kann, über eine einzelne Leitung. Die beiden vorderen Frontlichteinheiten des Fahrzeugs stellen gegenseitig über nur eine Leitung eine sogenannte Notbeleuchtung für die jeweils benachbarte Frontlichteinheit bereit, wenn die Stromversorgung für eine der beiden Frontlichteinheiten ausfällt.

DE 100 44 194 A1 offenbart eine Entladungslampenvorrichtung für Fahrzeuge.

EP 1 379 108 A1 offenbart eine LED Versorgungs- und Identifikationseinheit.

Aus der DE 101 09 024 B4 ist ein getakteter Spannungswandler bekannt.

Aus der DE 10 2010 050 851 A1 ist bekannt, dass DC-DC-Wandler aus einer Bordnetzspannung eine Betriebsspannung für Halbleiterlichtquellen erzeugen.

Aus der DE 10 2009 053 581 B3 ist ein Lichtmodul bekannt, das mehrere matrixartig angeordnete Halbleiterlichtquellen umfasst.

Des Weiteren ist bekannt, dass jeder Leuchteinheit eines Kraftfahrzeugscheinwerfers ein jeweiliger Spannungswandler zugeordnet ist. Entsprechend führt ein Ausfall eines einzelnen Spannungswandlers zum Ausfall der Leuchtfunktion der entsprechenden Leuchteinheit.

Es können mehrere Spannungswandler mit ähnlichen Eigenschaften für einen Scheinwerfer vorgesehen sein. Bestimmte Lichtverhältnisse, wie beispielsweise durch Abblendlicht erzeugt, sind für ein sicheres Fahren notwendig, wohingegen andere Funktionen wie Fernlicht nur zeitweilig eingeschaltet sind.

Mithin ist es Aufgabe der Erfindung, einen Ausfall einer Leuchtfunktion zu verhindern.

Das der Erfindung zugrunde liegende Problem wird durch eine Beleuchtungsanordnung gelöst, die im Anspruch 1 definiert ist. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Mittels einer zwischen Leuchteinheiten und Spannungswandlern angeordneten Schalteinheit wird ein zweiter Spannungswandler mit einer ersten Leuchteinheit verbunden. Vorteilhaft kann dadurch die erste Leuchteinheit auch bei Ausfall eines zugehörigen ersten Spannungswandlers weiter betrieben werden, was die Verkehrssicherheit und Fahrbereitschaft des Kraftfahrzeugs erhöht.

Es wird ein Fehler bezüglich des ersten Spannungswandlers und/oder bezüglich der ersten Leuchteinheit ermittelt und in Abhängigkeit von dem ermittelten Fehler wird der zweite Spannungswandler mit der ersten Leuchteinheit verbunden. Vorteilhaft kann damit auch bei Auftreten eines Fehlers eine Energieversorgung der ersten Leuchteinheit sichergestellt werden.

Der ersten Leuchteinheit wird eine höhere Betriebspriorität zugeordnet als der zweiten Leuchteinheit. Die zweite Leuchteinheit wird stromlos geschaltet. Mithin kann bei Ausfall eines Spannungswandlers, der einer Leuchteinheit zugeordnet ist, die eine höhere Betriebspriorität als eine andere Leuchteinheit aufweist, beispielsweise ein Abblendlicht bei Ausfall des entsprechenden Spannungswandlers mit einem Spannungswandler eines Fernlichts weiter betrieben werden.

In einer vorteilhaften Ausführungsform wird ein Sensorsignal, insbesondere ein Strom oder eine Spannung, zwischen den ersten Spannungswandler und der ersten Leuchteinheit ermittelt. Der Fehler wird in Abhängigkeit von dem Sensorsignal ermittelt. Durch die Anordnung des entsprechenden Sensors zwischen dem ersten Spannungswandler und der ersten Leuchteinheit kann beispielsweise durch einen Soll-Ist-Wert-Vergleich zum einen festgestellt werden, ob der Spannungswandler korrekt funktioniert und zum anderen kann festgestellt werden, ob die Leuchteinheit korrekt funktioniert.

In einer vorteilhaften Ausführungsform wird der zweite Spannungswandler vor der Verbindung des zweiten Spannungswandlers mit der ersten Leuchteinheit mit einem Betriebsparameter für die erste Leuchteinheit, insbesondere einer Ausgangsspannung des Spannungswandlers, konfiguriert. Vorteilhaft kann durch diese Konfiguration eine Anpassung des zweiten Spannungswandlers an die erste Leuchteinheit erfolgen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Hierbei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen:
- Figur 1: eine Beleuchtungseinrichtung für ein Kraftfahrzeug;
- Figuren 2 und 3: schematische Blockdiagramme.

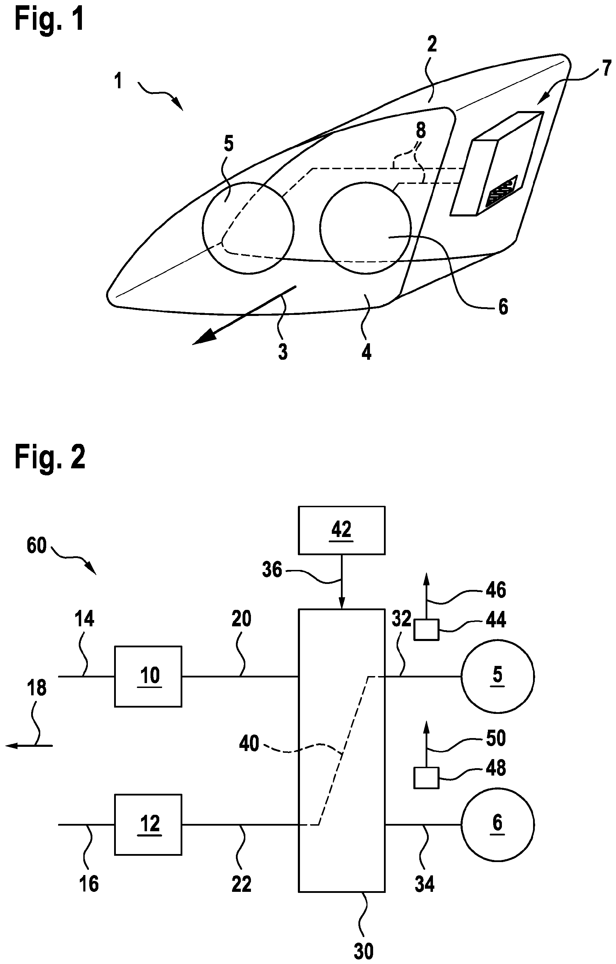

In Figur 1 ist eine Beleuchtungseinrichtung für ein Kraftfahrzeug in ihrer Gesamtheit mit dem Bezugszeichen 1 bezeichnet. Die Beleuchtungseinrichtung 1 ist als Kraftfahrzeugscheinwerfer ausbildet. Der Scheinwerfer 1 umfasst ein Gehäuse 2, welches durch eine transparente Abdeckscheibe 4 verschlossen ist. In einer Lichtaustrittsrichtung 3 weist das Scheinwerfergehäuse 2 eine Lichtaustrittsöffnung auf.

Der Scheinwerfer 1 umfasst zwei Leuchteinheiten 5 und 6, die entweder alleine oder in Kombination miteinander eine gewünschte Lichtverteilung erzeugen. Die Leuchteinheiten 5 und 6 können beispielsweise als Reflexionsmodule, Projektionsmodule oder aber gemeinsam ein Lichtmodul bilden.

An der Außenseite des Scheinwerfergehäuses 2 ist ein Steuergerät 7 angeordnet. Alternativ kann das Steuergerät 7 auch integraler Bestandteil der Leuchteinheiten 5 und 6 sein. Die Ansteuerung der Leuchteinheiten 5 und 6 durch das Steuergerät 7 erfolgt über Verbindungsleitungen 8, die in Figur 1 durch eine gestrichelte Linie symbolisch dargestellt sind. Über die Leitungen 8 erfolgt eine Versorgung der Leuchteinheiten 5, 6 mit elektrischer Energie.

Die Leuchteinheiten 5, 6 nutzen als Lichtquellen jeweils eine oder mehrere Halbleiterlichtquellen, insbesondere Leuchtdioden. Scheinwerfer 1, die eine Vielzahl von Leuchtdioden aufweisen, werden als Pixel- oder Matrixscheinwerfer bezeichnet. Bei diesen Matrixscheinwerfern werden Teile, insbesondere eine einzige oder mehrere Leuchtdioden, gedimmt oder ein-, bzw. ausgeschaltet, um unterschiedliche Lichtverteilungen zu erreichen. Bei diesen Matrixscheinwerfern ist es nun möglich einen ersten Teil der Leuchtdioden der Leuchteinheit 5 zuzuordnen und einen zweiten Teil der Leuchtdioden der Leuchteinheit 6 zuzuordnen.

Beispielsweise ist die Leuchteinheit 5 zur Erzeugung eines Abblendlichts und/oder zur Erzeugung eines Positionslichts vorgesehen. Die Leuchteinheit 6 ist zur Erzeugung eines Tagfahrlichts, Fernlichts oder einer sonstigen Lichtverteilung vorgesehen. In diesem Beispiel hat die erste Leuchteinheit 5 aufgrund ihrer Sicherheitsfunktion für die Erzeugung vorrangiger Lichtverteilungen eine höhere Betriebspriorität im Vergleich zur Leuchteinheit 6.

Figur 2 zeigt ein schematisches Blockdiagramm, das in seiner Gesamtheit als Schaltungsanordnung 60 bezeichnet wird. Ein erster Spannungswandler 10 ist zu einem Betrieb der ersten Leuchteinheit 5 vorgesehen. Ein zweiter Spannungswandler 12 ist zum Betrieb der zweiten Leuchteinheit 6 vorgesehen. Über Leitungen 14 und 16 sind die Spannungswandler 10 und 12 jeweils an das Bordnetz 18 des Kraftfahrzeugs angeschlossen. Alternativ können die Spannungswandler 10 und 12 auch an eine Zwischenspannung und damit an weitere Komponenten in Richtung des Bordnetzes 18 angeschlossen sein. Auf Ausgangsleitungen 20 und 22 erzeugen die Spannungswandler 10 und 12 ein vom Eingang unterschiedliches Spannungsniveau, das den jeweiligen Leuchteinheiten 5 und 6 zuführbar ist. Die Ausgangsleitungen 20 und 22 sind an eine Schalteinheit 30 angeschlossen, die im Normalbetrieb die Leitung 20 mit einer Leitung 32 zum Betrieb der Leuchteinheit 5 verbindet und die Leitung 22 mit einer Leitung 34 zum Betrieb der Leuchteinheit 6 verbindet.

Bei Empfang eines Auslösesignals 36 öffnet die Schalteinheit 30 die Verbindung zwischen den Leitungen 20 und 32 und die Verbindung zwischen den Leitungen 22 und 34 und verbindet die Leitungen 22 und 32 gemäß einem Verbindungspfad 40, um die Leuchteinheit 5 weiter zu betreiben. Die Leuchteinheit 6 wird hierbei stromlos geschaltet. Das Auslösesignal 36 wird von einer Überwachungseinheit 42 erzeugt, die einen Fehler im Bereich des Spannungswandlers 10 und/oder im Bereich der Leuchteinheit 5 feststellt. Insbesondere führen vorteilhaft Fehler im Bereich des Spannungswandlers 10 durch Auslösen des Verbindungspfades 40 nicht zum Ausfall der Leuchteinheit 5.

Der Leitung 32 ist ein Sensor 44 zur Ermittlung eines Sensorsignals 46 zugeordnet. Das Sensorsignal 46 kann einen Strom oder eine Spannung bezüglich der Leitung 32 umfassen. Der Leitung 34 ist ein Sensor 48 zur Ermittlung eines Sensorsignals 50 zugeordnet, wobei es sich bei dem Sensorsignal 50 um einen Strom und/oder eine Spannung bezüglich der Leitung 34 handelt.

Die Sensorsignale 46 und 50 werden der Überwachungseinheit 42 zugeführt. Die Überwachungseinheit 42 kann einen relativen Vergleich der Sensorsignale 46 und 50 durchführen. Des Weiteren kann ein Vergleich der jeweiligen Sensorsignale 46 und 50 mit einem entsprechenden Soll-Wert erfolgen. In Abhängigkeit von der Auswertung der Sensorsignale 46 und 50 bzw. eines der Sensorsignale 46 und 50 wird das Auslösesignal 36 ermittelt. Durch die Anordnung der Sensoren 44 bzw. 48 zwischen der Schalteinheit 30 und der jeweiligen Leuchteinheit 5 bzw. 6 kann vorteilhaft besser zwischen einer Fehlfunktion der Leuchteinheit 5 bzw. 6 und einer weiteren Einheit in Richtung des Bordnetzes 18 unterschieden werden.

Ist beispielsweise die Leuchteinheit 5 zur Erzeugung einer Abblendlichtverteilung ausgebildet und ist die Leuchteinheit 6 zur Erzeugung einer Fernlichtverteilung ausgebildet, so kann durch eine Ermittlung einer Verringerung einer Spannung unter einen vorbestimmten Schwellwert auf der Leitung 32 mittels des Sensors 44 ein Defekt erkannt werden und der Pfad 40 aktiviert werden. Ist die nachrangige Leuchteinheit 6 zum Zeitpunkt der Defekterkennung nicht aktiv, dann wird der Spannungswandler 10 deaktiviert und der Spannungswandler 12 zum Betrieb der Leuchteinheit 5 aktiviert, d.h. zum Betrieb der Leuchteinheit 5 umgeschaltet. Ist die nachrangige Leuchteinheit 6 zum Zeitpunkt der Defekterkennung eingeschaltet, so wird diese abgeschaltet und der Spannungswandler 12 zum Betrieb der Leuchteinheit 5 umgeschaltet. Anschließend wird die Leuchteinheit 5 eingeschaltet und eine Fehlermeldung wird dem Fahrer des Fahrzeugs zur Kenntnis gebracht. Zur Erkennung des Spannungsabfalls auf der Leitung 32 muss eine Überwachung der Leitung 34 nicht zwingend erfolgen, womit auch bei ausgeschaltetem Fernlicht gemäß der Leuchteinheit 6 der Betrieb der Leuchteinheit 5 sicher aufrechterhalten werden kann. Damit fungiert der Spannungswandler 12, der im Normalbetrieb zum Betrieb des Fernlichts im Sinne der Leuchteinheit 6 vorgesehen ist als Reserve für den Spannungswandler 10 des Abblendlichts 5. Mithin steht bei einem Ausfall des Spannungswandlers 10 kein Fernlicht mehr zur Verfügung, was aber durch das Aufrechterhalten eines sicheren Fahrzustands mittels der aktiven Abblendlichtfunktion toleriert wird.

Selbstverständlich sind noch weitere Beispiele für zwei unterschiedlich priorisierte Leuchteinheiten 5 und 6 denkbar. Im Falle von Matrixscheinwerfern können beispielsweise bestimmte Bereiche und/oder aber bestimmte Leuchtdioden den unterschiedlichen Leuchteinheiten 5, 6 und damit unterschiedlichen Spannungswandlern 10, 12 zugeordnet werden.

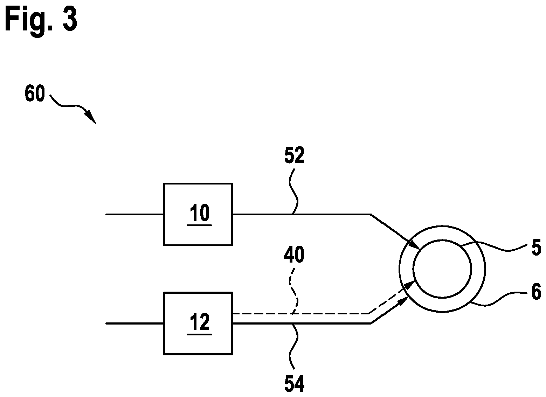

Figur 3 zeigt ein Blockschaltbild in einer weiteren Ausführungsform der Schaltungsanordnung 60. Beispielhaft ist in einer schematischen Sicht entgegen der Abstrahlrichtung gezeigt wie die Leuchteinheit 5 innerhalb der Leuchteinheit 6 angeordnet ist. Der Leuchteinheit 5 ist eine höhere Betriebspriorität zugeordnet als der Leuchteinheit 6, da die zentral durch die Leuchteinheit 5 erzeugte Lichtverteilung eine höhere Betriebspriorität besitzt. Durch die hier vorgestellte Schaltungsanordnung 60 kann bei einem Ausfall im Zentrum des Scheinwerfers, d.h. im Bereich der Leuchteinheit 5, der Wandler 12 gemäß dem Verbindungspfad 40 zum Betrieb der Leuchteinheit 5 verwendet werden. Die Leuchteinheit 6 wird hierbei stromlos geschaltet. Die Verbindungspfade 52 und 54 dienen zum Normalbetrieb des Scheinwerfers. Insbesondere ist das Zentrum eines Matrixscheinwerfers in Form der Leuchteinheit 5 wichtiger für die erzeugte Lichtverteilung wie der Rand des Matrixscheinwerfers in Form der Leuchteinheit 6.

## Patentansprüche

1. Beleuchtungsanordnung umfassend:
- ein Lichtmodul eines Kraftfahrzeugs, umfassend eine erste Leuchteinheit (5) und eine zweite Leuchteinheit (6) und
- eine Schaltungsanordnung (60) zum Betreiben der ersten und der zweiten Leuchteinheit (5, 6) des Lichtmoduls,
wobei jede der ersten und zweiten Leuchteinheiten (5, 6) als Lichtquellen jeweils eine oder mehrere Leuchtdioden aufweisen,
**dadurch gekennzeichnet, dass**
die Schaltungsanordnung (60)
- einen ersten Spannungswandler (10) zu einem Betrieb der ersten Leuchteinheit (5),
- einen zweiten Spannungswandler (12) zum Betrieb der zweiten Leuchteinheit (6),
- eine Schalteinheit (30) und
- eine Überwachungseinheit (42)
aufweist,
dass die Schalteinheit (30) zwischen der ersten und zweiten Leuchteinheit (5, 6) und dem ersten und zweiten Spannungswandler (10, 12) angeordnet ist,
dass im Normalbetrieb mittels der Schalteinheit (30) die erste Leuchteinheit (5) mit dem ersten Spannungswandler (12) und die zweite Leuchteinheit (6) mit dem zweiten Spannungswandler (12) verbindbar ist,
dass die Schalteinheit (30) dazu ausgelegt ist, nach Erhalt eines Auslösesignals (36) erzeugt von der Überwachungseinheit (42), welche einen Fehler bezüglich des ersten Spannungswandlers (12) ermittelt, den zweiten Spannungswandler (12) mit der ersten Leuchteinheit (5) zu verbinden und die zweite Leuchteinheit (6) stromlos zu schalten, dass der ersten Leuchteinheit (5) eine höhere Betriebspriorität zugeordnet ist als der zweiten Leuchteinheit (6).

2. Beleuchtungsanordnung nach Anspruch 1, **dadurch gekennzeichnet, dass** die Schaltungsanordnung (60) einen Sensor (44) aufweist, der einer Leitung (32) der Beleuchtungseinrichtung, welche die erste Leuchteinheit (5) mit der Schalteinheit (30) verbindet, zugeordnet ist, wobei der Sensor (44) zur Ermittlung eines Sensorsignals eingerichtet ist,
wobei das Sensorsignal einen Strom oder eine Spannung der Leitung (32) zwischen dem ersten Spannungswandler (10) und der ersten Leuchteinheit (5) umfasst,
wobei das Sensorsignal (46) der Überwachungseinheit (42) zugeführt ist, und
wobei die Überwachungseinheit (42) eingerichtet ist, das Auslösesignal in Abhängigkeit von dem zugeführten Sensorsignal (46) zu ermitteln.

3. Beleuchtungsanordnung nach dem Anspruch 2, **dadurch gekennzeichnet, dass** der zweite Spannungswandler (12) mit einem Betriebsparameter der ersten Leuchteinheit (5), welcher eine Ausgangsspannung des ersten Spannungswandlers (10) ist, konfigurierbar ist.

## Claims

1. Lighting arrangement comprising:
- a light module of a motor vehicle, comprising a first light-emitting unit (5) and a second light-emitting unit (6) and
- a circuit arrangement (60) for operating the first and the second light-emitting unit (5, 6) of the light module,
each of the first and the second light-emitting unit (5, 6) having in each case one or more light-emitting diodes as light sources,
**characterized in that**
the circuit arrangement (60) has
- a first voltage converter (10) for operation of the first light-emitting unit (5),
- a second voltage converter (12) for operation of the second light-emitting unit (6),
- a switching unit (30) and
- a monitoring unit (42),
**in that** the switching unit (30) is arranged between the first and the second light-emitting unit (5, 6) and the first and the second voltage converter (10, 12),
**in that** in normal operation the first light-emitting unit (5) can be connected to the first voltage converter (12) and the second light-emitting unit (6) can be connected to the second voltage converter (12) by means of the switching unit (30),
**in that** the switching unit (30) is designed to connect the second voltage converter (12) to the first light-emitting unit (5) and to de-energize the second light-emitting unit (6) after receiving a trigger signal (36) generated by the monitoring unit (42) which detects a fault with respect to the first voltage converter (12),
**in that** the first light-emitting unit (5) is assigned a higher operating priority than the second light-emitting unit (6).

2. Lighting arrangement according to claim 1,
**characterized in that** the circuit arrangement (60) has a sensor (44) which is assigned to a line (32) of the lighting device which connects the first light-emitting unit (5) to the switching unit (30),
the sensor (44) being configured to detect a sensor signal,
the sensor signal comprising a current or a voltage of the line (32) between the first voltage converter (10) and the first light-emitting unit (5),
the sensor signal (46) being fed in to the monitoring unit (42), and
the monitoring unit (42) being configured to detect the trigger signal depending on the sensor signal (46) fed in.

3. Lighting arrangement according to claim 2,
**characterized in that** the second voltage converter (12) is configurable with an operating parameter of the first light-emitting unit (5), which operating parameter is an output voltage of the first voltage converter (10).

## Revendications

1. Dispositif d'éclairage, comprenant:
- un module lumineux d'un véhicule à moteur, comprenant une première unité d'éclairage (5) et une seconde unité d'éclairage (6), et
- un circuit (60) permettant de faire fonctionner les première et seconde unités d'éclairage (5, 6) du module lumineux,
chacune des première et seconde unités d'éclairage (5, 6) comprenant une ou plusieurs diode(s) électroluminescente(s) faisant office de source(s) lumineuse(s),
**caractérisé en ce que**
le circuit (60) comprend
- un premier transformateur de tension (10) destiné au fonctionnement de la première unité d'éclairage (5),
- un second transformateur de tension (12) destiné au fonctionnement de la seconde unité d'éclairage (6),
- une unité de commutation (30) et
- une unité de surveillance (42),
**en ce que** l'unité de commutation (30) est agencée entre les première et seconde unités d'éclairage (5, 6) et les premier et second transformateurs de tension (10, 12),
**en ce que**, en fonctionnement normal, la première unité d'éclairage (5) peut être connectée au premier transformateur de tension (12) et la seconde unité d'éclairage (6) au second transformateur de tension (12) au moyen de l'unité de commutation (30),
**en ce que** l'unité de commutation (30) est conçue pour connecter le second transformateur de tension (12) à la première unité d'éclairage (5) et mettre la seconde unité d'éclairage (6) hors tension, après réception d'un signal de déclenchement (36) généré par l'unité de surveillance (42) qui détermine qu'il existe une défaillance par rapport au premier transformateur de tension (12),
**en ce que** la priorité de fonctionnement attribuée à la première unité d'éclairage (5) est plus élevée que celle attribuée à la seconde unité d'éclairage (6).

2. Dispositif d'éclairage selon la revendication 1, **caractérisé en ce que** le circuit (60) comprend un capteur (44) associé à une ligne (32) du dispositif d'éclairage qui connecte la première unité d'éclairage (5) à l'unité de commutation (30), le capteur (44) étant conçu pour déterminer un signal de capteur, le signal de capteur comprenant un courant ou une tension de la ligne (32) entre le premier transformateur de tension (10) et la première unité d'éclairage (5),
le signal de capteur (46) étant fourni à l'unité de surveillance (42), et
l'unité de surveillance (42) étant conçue pour déterminer le signal de déclenchement en fonction du signal de capteur (46) fourni.

3. Dispositif d'éclairage selon la revendication 2, **caractérisé en ce que** le second transformateur de tension (12) peut être configuré avec un paramètre de fonctionnement de la première unité d'éclairage (5), qui est une tension de sortie du premier transformateur de tension (10).
